Europäisches Patentamt

European Patent Office

Office européen des brevets

(19)

(11) **EP 1 040 559 B1**

(12) **FASCICULE DE BREVET EUROPEEN**

(45) Date de publication et mention
de la délivrance du brevet:
**18.09.2002   Bulletin 2002/38**

(21) Numéro de dépôt: **98963614.7**

(22) Date de dépôt: **23.12.1998**

(51) Int Cl.⁷: **H02M 3/335**

(86) Numéro de dépôt international:
**PCT/FR98/02854**

(87) Numéro de publication internationale:
**WO 99/034501 (08.07.1999 Gazette 1999/27)**

(54) **PROCEDE DE COMMANDE D'UN CONVERTISSEUR DE TENSION CONTINU-CONTINU A STOCKAGE INDUCTIF**

**STEUERVERFAHREN FÜR GLEICHSTROMWANDLER MIT INDUKTIVEM ENERGIESPEICHER**

**METHOD FOR CONTROLLING DC/DC VOLTAGE CONVERTER WITH INDUCTION STORAGE**

(84) Etats contractants désignés:
**BE CH DE FR GB IE LI NL SE**

(30) Priorité: **23.12.1997  FR 9716348**

(43) Date de publication de la demande:
**04.10.2000   Bulletin 2000/40**

(73) Titulaire: **THALES AVIONICS S.A.
78141 Vélizy Villacoublay Cédex (FR)**

(72) Inventeur: **TAURAND, Christophe,
Thomson-CSF Prop. Intell.
94117 Arcueil Cedex (FR)**

(74) Mandataire: **Beylot, Jacques
Thomson-CSF Propriété Intellectuelle,
13, Avenue du Président Salvador Allende
94117 Arcueil Cédex (FR)**

(56) Documents cités:
**EP-A- 0 767 529      DE-A- 4 438 387
FR-A- 2 729 516**

Printed by Jouve, 75001 PARIS (FR)

## Description

La présente invention concerne un procédé de commande d'un convertisseur de tension continu-continu, ou hacheur, à stockage inductif. Plus particulièrement, l'invention concerne un tel procédé qui, de façon connue, fonctionne selon des cycles de transfert d'énergie entre une source primaire et une source secondaire, chaque cycle comprenant une période d'accumulation d'énergie magnétique dans un élément inductif à partir de la source primaire, suivie d'une période de restitution de cette énergie dans la source secondaire

Les convertisseurs de tension continu-continu à stockage inductif comportent un élément de stockage inductif placé entre un circuit primaire à interrupteur commandé intercalé devant une source d'alimentation et un circuit secondaire à interrupteur intercalé devant une charge. Le circuit primaire assure, par la manoeuvre de son interrupteur, le contrôle des cycles de fourniture d'énergie de la source d'alimentation à l'élément de stockage inductif tandis que le circuit secondaire assure le contrôle des cycles de fourniture d'énergie de l'élément de stockage inductif à la charge.

A l'origine, ces convertisseurs de tension continu-continu utilisaient une fréquence de hachage fixe et ne possédaient pas de régulation de leur tension de sortie. La fréquence de hachage fixe était une caractéristique intéressante lors de l'alimentation de charges sensibles au bruit radioélectrique car le bruit radioélectrique du convertisseur restait cantonné dans une faible bande autour de sa fréquence de hachage et il était possible, en déplaçant cette fréquence de hachage, de parvenir à minimiser l'influence du bruit radioélectrique du convertisseur sur sa charge en tenant compte des fréquences sensibles de cette dernière. Par contre, l'absence de régulation de la tension de sortie était très souvent gênante dans la mesure où celle-ci était sujette à des fluctuations importantes en fonction des variations de la puissance absorbée par la charge et des variations de tension de la source d'alimentation.

Dans un premier temps, on a été amené à prévoir, en sortie des convertisseurs de tension continu-continu à stockage inductif, une régulation de tension par ballast pour les charges sensibles aux variations de tension d'alimentation. Mais il en est résulté une perte de rendement importante. Pour résoudre ce problème, on a équipé, dans un deuxième temps, les convertisseurs de tension continu-continu à stockage inductif d'asservissements de régulation de leur tension de sortie qui jouent essentiellement sur la durée de leur cycle de fourniture d'énergie à leur élément de stockage inductif.

Il existe un grand nombre de types d'asservissements de régulation de tension de sortie pour convertisseurs continu-continu à stockage inductif. Parmi les plus aboutis, on peut citer celui décrit dans la demande de brevet français FR-A-2 729 516. Ces asservissements de régulation de tension de sortie donnent, de manière générale, satisfaction et améliorent le rendement dans une grande proportion. Cependant, ils entraînent une variation de la fréquence de hachage en fonction de la puissance absorbée par la charge et de la tension de la source d'alimentation. Cette variation de fréquence de hachage produit un élargissement de la bande de bruit du convertisseur rendant les problèmes de parasitage radioélectrique des charges plus difficiles à résoudre. En outre, elle induit des variations du rendement qui diminue lorsque la fréquence de hachage augmente.

On connaît, notamment par le brevet allemand DE-44 38 387, des convertisseurs de tension continu-continu à stockage inductif et asservissement de la tension de sortie, qui fonctionnent à fréquence fixe mais ceux-ci posent à la fois des problèmes de rendement et de bruits radioélectriques par le fait qu'ils sont le siège de grandes impulsions de courant.

Ces convertisseurs comportent, comme à l'habitude, un élément de stockage inductif, un circuit primaire à interrupteur commandé intercalé entre une source d'alimentation et l'élément de stockage inductif et un circuit secondaire à interrupteur intercalé entre l'élément de stockage inductif et une charge. Ils présentent en plus, dans leur circuit primaire, un détecteur de surcourant qui provoque l'ouverture de l'interrupteur commandé en cas de surcourant, et dans leur circuit secondaire un dispositif de mise en court-circuit des bornes de l'élément de stockage inductif déclenché en fonction de la tension instantanée apparaissant aux bornes de la charge. La régulation de la tension aux bornes de la charge est obtenue ici en déplaçant la transition entre les périodes d'accumulation et de restitution d'énergie depuis l'élément de stockage inductif au cours de chaque cycle de hachage de durée constante. Pour ce faire, on provoque, dans le circuit secondaire, plus ou moins tôt dans chaque période d'accumulation d'énergie dans l'étément de stockage inductif, c'est-à-dire pendant la conduction de l'interrupteur commandé du circuit primaire, un court-circuit qui entraîne un surcourant dans le circuit primaire et déclenche l'ouverture de l'interrupteur commandé par le détecteur de surcourant. Cette impulsion de surcourant à chaque cycle de hachage dégrade le rendement et augmente le bruit radioélectrique du convertisseur.

On connaît également, notamment par la demande européenne de brevet EP-A-0 767 529, un convertisseur continu-continu à topologie demi-pont de type "forward", qui présente des moyens commandés de court-circuit de l'enroulement primaire de son transformateur placé dans la diagonale du demi-pont et alimenté en courant alternatif par des interrupteurs commandés placés de part et d'autre sur les côtés du demi-pont.

Cependant, ce type de convertisseur a l'inconvénient de nécessiter deux. éléments magnétiques distinctes pour réaliser l'isolement galvanique et le stockage de l'énergie magnétique. le transformateur qui sert uniquement pour l'isolation galvanique et l'inductance de filtrage du secondaire qui réalise l'essentiel du stockage de l'énergie magnétique. Ainsi les moyens commandés de court-circuit placés aux bornes de l'enroulement primaire du transformateur ne court-circuitent pas l'élément de stockage inductif du convertisseur mais force à zéro la tension du transformateur pendant une durée plus ou moins longue à chaque inversion du sens du courant dans le primaire du transformateur. Pendant ces durées de forçage à zéro, l'élément de stockage de l'énergie inductive qui est l'inductance de filtrage du secondaire continue à débiter son énergie dans la charge du convertisseur de sorte que ces durées de forçage à zéro correspondent à des périodes de diminution de l'énergie inductive stockée et non de conservation.

La présente invention vise notamment à pallier ces inconvénients et, plus particulièrement, à fournir un convertisseur de tension continu-continu à stockage inductif, et régulation de tension de sortie, ayant, par rapport à ceux de l'art antérieur, un niveau de bruit radioélectrique moindre, dans une bande de fréquence plus réduite, et un meilleur rendement sur une plus grande plage de fonctionnement, à la fois en ce qui concerne la tension et la puissance absorbée par la charge.

A cet effet, l'invention a tout d'abord pour objet un procédé de commande d'un convertisseur de tension continu-continu à stockage inductif fonctionnant selon des cycles de transfert d'énergie entre une source primaire et une source secondaire, chaque cycle comprenant : deux phases distinctes, une phase d'accumulation d'énergie magnétique dans un élément de stockage inductif à transformateur, à partir de la source primaire et une phase de restitution de cette énergie dans la source secondaire, et comportant pour ce faire, outre ledit élément de stockage inductif, un circuit primaire à interrupteur commandé intercalé entre la source primaire et l'élément de stockage inductif et un circuit secondaire à interrupteur commandé intercalé entre l'élément de stockage inductif et la source secondaire. Dans ce procédé de commande, on introduit au sein d'un cycle de transfert d'énergie une phase énergétiquement neutre pendant laquelle l'élément de stockage inductif conserve son énergie, les interrupteurs commandés des circuits primaire et secondaire étant ouverts et des moyens assurant une tension électrique nulle aux bornes de l'élément de stockage inductif, cette phase énergétiquement neutre ayant une durée au sein d'un cycle de transfert d'énergie telle que le convertisseur fonctionne à fréquence prédéterminée.

Ce procédé de commande permet de fixer comme on l'entend la largeur de la plage de variation de la fréquence de hachage du convertisseur, tout en permettant la mise en oeuvre des perfectionnements décrits dans la document FR-A-2 729 516. On conserve ainsi les avantages liés à ces perfectionnements, avec en outre, une nouvelle amélioration du rendement obtenue par abaissement des pertes magnétiques et de commutation, la fréquence pouvant être maintenue à un niveau plus faible, sans augmentation des courants.

En particulier, on adoptera généralement une fréquence de fonctionnement constante correspondant à celle du document précité pour les conditions de tension d'entrée minimale et de charge maximale qui procurent le meilleur rendement.

Un autre avantage de fonctionner à fréquence constante est de pouvoir synchroniser le convertisseur avec d'autres fonctions. On peut ainsi réduire les parasites, les bruits ou les battements de fréquence.

Il est également possible, avec une fréquence de fonctionnement constante, de réaliser des filtres d'entrée accordés sur cette fréquence.

De préférence, on débute ladite phase énergétiquement neutre à un passage à 0 de la tension aux bornes de l'inductance magnétisante de l'élément inductif.

De préférence également, on débute ladite phase énergétiquement neutre alors que le courant traversant l'inductance magnétisante est le plus faible possible.

Si cette phase doit débuter lors d'un passage à 0 de la tension, on a en effet le choix au cours du cycle entre deux instants. On choisira donc celui où le courant est minimum pour minimiser le courant circulant dans l'élément assurant une tension nulle aux bornes de l'élément inductif.

Dans un mode de réalisation particulier, on court-circuite ledit élément inductif à l'aide d'un transistor MOS disposé en série avec une diode, la fermeture du transistor étant commandée à un instant où la diode est polarisée en inverse.

L'invention a également pour objet un convertisseur de tension continu-continu à stockage inductif, comprenant un élément de stockage inductif à transformateur, un circuit primaire à interrupteur commandé intercalé entre une source primaire de fourniture d'énergie et ledit élément de stockage inductif, et un circuit secondaire à interrupteur commandé intercalé entre l'élément de stockage inductif et une source secondaire de restitution d'énergie, et des moyens pour commander cycliquement, à la fermeture, les interrupteurs commandés desdits circuits primaire et secondaire pendant des intervalles de temps distincts afin de doter le convertisseur d'un fonctionnement cyclique, avec, au cours de chaque cycle, une phase d'accumulation d'énergie et une phase de restitution d'énergie, caractérisé par le fait qu'il comprend des moyens de court-circuit pour court-circuiter ledit élément de stockage inductif, et des moyens pour commander lesdits moyens de court-circuit de manière à introduire dans le cycle de fonctionnement du convertisseur une phase énergétiquement neutre pendant laquelle l'élément de stockage inductif conserve une énergie constante, les interrupteurs commandés des circuits primaire et secondaire étant ouverts.

Dans un mode de réalisation particulier, ledit élément de couplage inductif comprend un enroulement primaire appartenant audit circuit primaire, lesdits moyens de court-circuit comprenant un interrupteur commandé disposé en parallèle sur ledit enroulement primaire.

Dans un autre mode de réalisation particulier, ledit élément de couplage inductif comprend un enroulement secondaire appartenant audit circuit secondaire, lesdits moyens de court-circuit comprenant un interrupteur commandé disposé en parallèle sur ledit enroulement secondaire.

Dans encore un autre mode de réalisation particulier, ledit élément de couplage inductif comprend un enroulement auxiliaire indépendant des circuits primaire et secondaire, lesdits moyens de court-circuit comprenant un interrupteur commandé disposé en parallèle sur ledit enroulement auxiliaire.

On décrira maintenant, à titre d'exemple non limitatif, des modes de réalisation particuliers de l'invention, en référence aux dessins schématiques annexés dans lesquels:

- la figure 1 est un schéma électronique d'un convertisseur selon un premier mode de réalisation de l'invention;.

- la figure 1a est une modélisation du transformateur représenté à la figure 1;

- les figures 2-1 à 2-6 illustrent les six phases du cycle de fonctionnement du convertisseur de la figure 1;

- la figure 3 représente l'évolution du courant dans l'inductance magnétisante et de la tension aux bornes du primaire du transformateur au cours de ce cycle;

- la figure 4 est un diagramme énergétique représentant l'évolution au cours du cycle de la tension aux bornes de l'inductance magnétisante et du courant la traversant; et

- les figures 5 et 6 sont des schémas similaires à celui de la figure 1 de deux autres modes de réalisation.

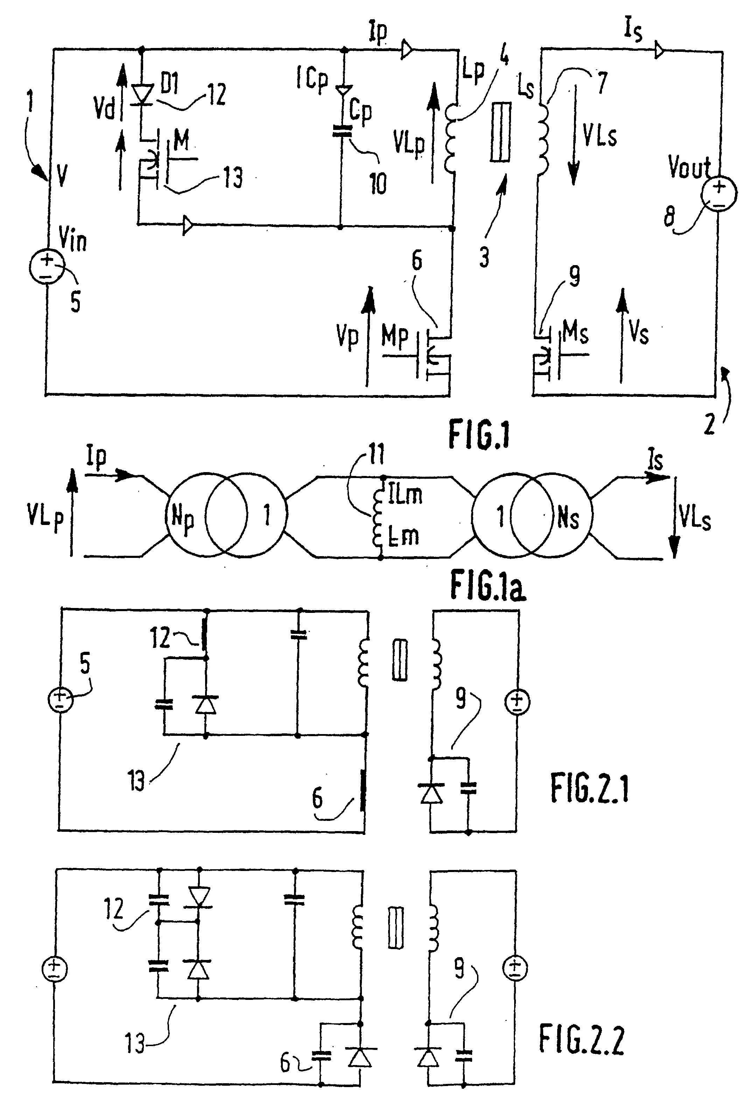

On voit à la figure 1 un convertisseur de tension continu-continu comprenant de façon connue un circuit primaire 1 et un circuit secondaire 2 couplés par un transformateur 3. Le circuit primaire 1 comprend, en série avec l'enroulement primaire 4 du transformateur 3, une source de tension 5, ici un générateur, et un transistor MOS de commande 6. De même, le circuit secondaire 2 comprend, en série avec l'enroulement secondaire 7 du transformateur 3, une source de tension 8, ici une charge filtrée, et un transistor MOS de commande 9. Un condensateur 10 est disposé en parallèle sur l'enroulement primaire 7, également de façon connue.

On voit à la figure 1e le transformateur 3 modélisé comme un transformateur parfait avec uniquement l'inductance magnétisante 11 du transformateur, de valeur Lm vue du milieu magnétisant. Np et Ns étant le nombre de spires des enroulements primaire et secondaire respectivement, Ip et Is le courant dans ces enroulements, le courant magnétisant a pour valeur

$$ILm = NpIp + NsIs$$

On notera par ailleurs Vin et Vout les tensions aux bornes des sources 5 et 8.

Selon l'invention, le circuit primaire 1 comprend en outre, en parallèle sur l'enroulement primaire 4, une diode 12 et un transistor MOS 13 dont le fonctionnement sera décrit ci-après.

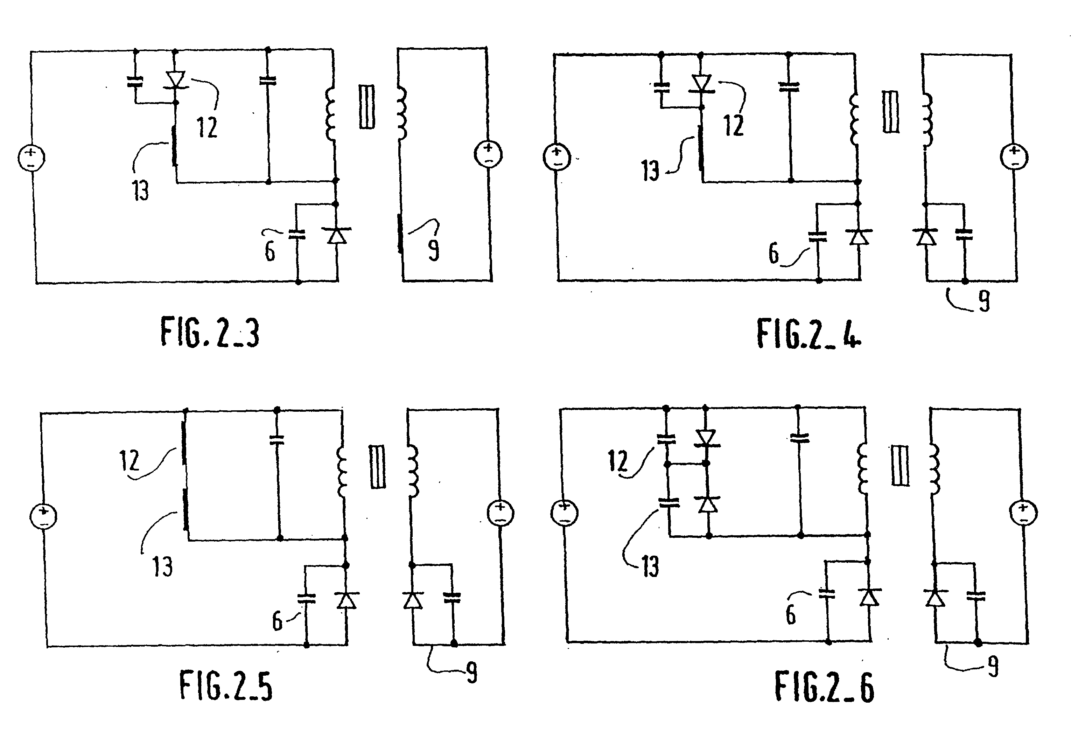

Cette description du fonctionnement du convertisseur de la figure 1 sera faite en référence aux figures 2-1 à 2-6. Les transistors MOS seront, dans ces figures, modélisés par leurs condensateurs et diodes parasites pendant les phases d'ouverture, et comme des courts-circuits pendant leurs phases de fermeture. Les diodes parasites seront elles-mêmes considérées comme idéales, c'est-à-dire comme des courts-circuits lorsqu'elles conduisent, et comme des circuits ouverts lorsqu'elles sont bloquées. Enfin, la diode 12 est modélisée comme une capacité en parallèle avec une diode idéale.

La première phase de fonctionnement (figure 2-1), d'une durée Ton, est celle du stockage de l'énergie dans le transformateur 3 à partir de la source 5. Le MOS primaire 6 est fermé quand la tension à ses bornes s'annule à la fin de la phase précédente, ce qui permet une commutation douce. Les MOS 9 et 13 sont ouverts et la diode 12 conduit.

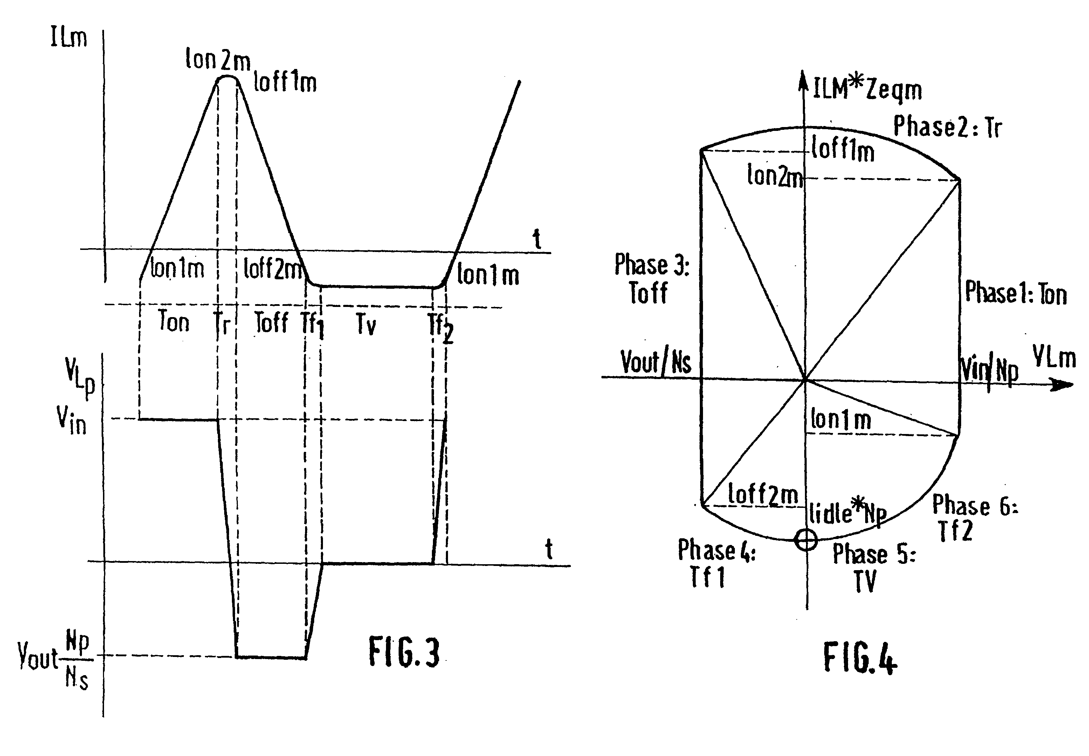

Au cours de cette première phase, le courant magnétisant varie de Ion1m, négatif, à Ion2m, positif. La tension aux bornes de l'inductance magnétisante demeure constante à la valeur Vin/Np (figure 4). La diode parasite du MOS 6 conduit tant que le courant Ip dans le circuit primaire est négatif. La détection d'une valeur de consigne Ion2p provoque l'ouverture du MOS 6, qui débute la phase 2, représentée à la figure 2-2.

Pendant cette deuxième phase, de durée Tr, tous les MOS sont ouverts. L'ouverture du MOS 6 provoque une résonance entre l'inductance primaire Lp et le condensateur Ceqp équivalent à tous les condensateurs du circuit ramené au primaire.

Au cours de cette phase, l'énergie est constante, et donc

$$ILm^2 * Zeqm + VLm^2 = Constante$$

et le point de fonctionnement du convertisseur décrit un arc de cercle sur la figure 4. La détection du passage à 0v de la tension Vs aux bornes de l'enroulement secondaire provoque la fermeture du MOS 9, et le début de la troisième phase.

Cette phase 3 est celle de la restitution au secondaire de l'énergie stockée, pendant un temps Toff. Le MOS 6 est ouvert et le MOS 13 est fermé (La diode 12 est polarisée en inverse, de sorte que le courant dans le MOS 13 est nul).

Pendant cette phase, la tension VLm aux bornes de l'inductance magnétisante est constante à la valeur -Vout/Ns (figure 4), et le courant ILm décroît de Ioff1m à Ioff2m (figure 3). La détection d'une valeur de consigne en Ioff2s provoque l'ouverture du MOS 9 et le début de la phase 4.

L'ouverture du MOS 9 entraîne une résonance. Le courant ILs continue à circuler et charge la capacité Cs du circuit vue du secondaire. Le MOS 6 est ouvert et le MOS 13 fermé.

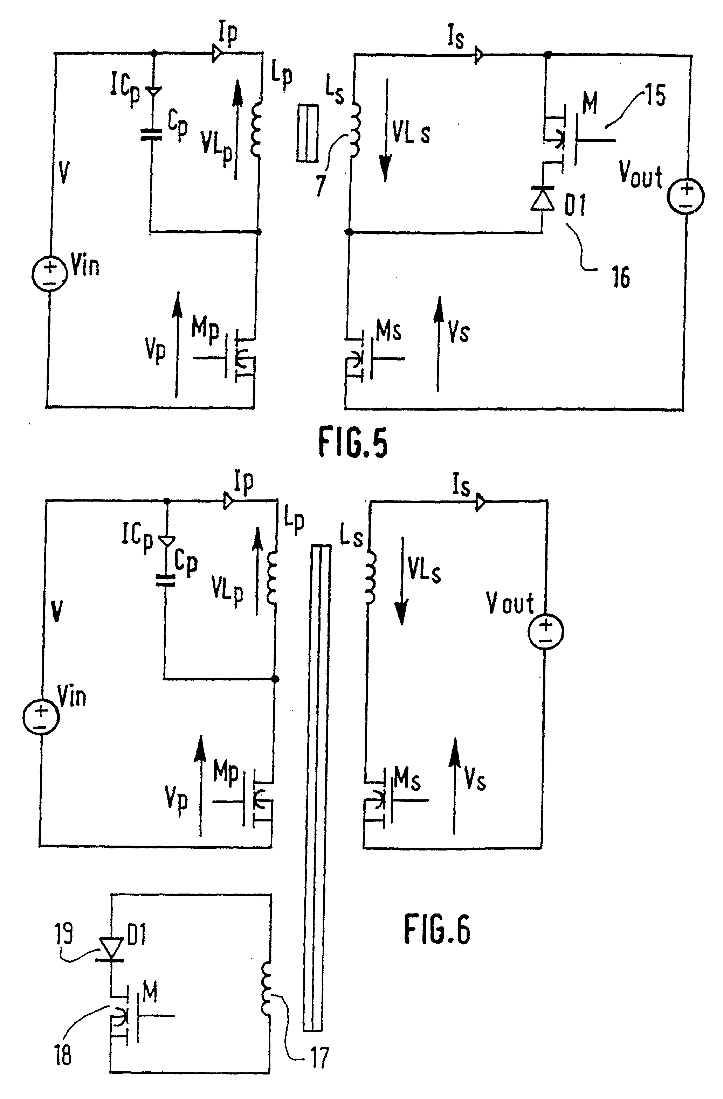

Au cours de cette phase, le point du diagramme de la figure 4 décrit un arc de cercle comme au cours de la phase 2, et la tension VLs augmente au fur et à mesure de la charge du condensateur par le courant ILs, jusqu'à ce que la diode 12 devienne passante, interrompant ainsi la résonance et débutant la cinquième phase au bout d'un temps Tf1 (figure 5).

Au cours de cette phase de veille, les deux MOS 6 et 9 sont ouverts. et le MOS 13 fermé. La diode 12 est passante, imposant une tension nulle aux bornes de l'enroulement primaire 4. Ainsi, le transformateur 3 garde une énergie constante au cours de cette phase, qui est donc neutre du point de vue énergétique.

Le courant ILm dans l'inductance magnétisante est constant, et la tension à ses bornes est nulle. Le point de fonctionnement sur le diagramme de la figure 4 est fixe, sur l'axe vertical des intensités. On observera que cette phase de veille aurait pu être déclenchée à l'autre point du diagramme à tension nulle, mais le courant de court-circuit aurait été plus élevé.

La durée Tv de cette phase de veille est réglée de telle sorte que

$$T = Ton + Tr + Toff + Tf1 + Tv + Tf2$$

soit constante et égale à la période de découpage, Tf2 étant la durée de la sixième phase qui sera décrite ci-après. C'est cette phase de veille qui permet de fonctionner à fréquence constante.

Lorsque la durée Tv est atteinte, le MOS 13 est commandé à l'ouverture, par des moyens non représentés susceptibles de calculer cette durée, et la phase de résonance reprend. Tous les MOS sont ouverts. Le point de fonctionnement sur le diagramme de la figure 4 poursuit l'arc de cercle de la phase 4.

La détection du passage à 0 de la tension du MOS 6 provoque le début de la phase 1 d'un nouveau cycle.

On observera ici que la fermeture du MOS 13 est commandée par tout moyen convenable en même temps que celle du MOS 9. Il s'agit là d'une simple disposition pratique, cette fermeture pouvant être commandée à tout instant des phases 3 et 4.

Les figures 5 et 6 illustrent deux autres modes de réalisation, dont les fonctionnements sont équivalents à celui de la figure 1.

Dans la figure 5, le MOS 15 de commande de la durée du cycle et sa diode 16 en série sont connectés en parallèle sur l'enroulement 7 du secondaire du transformateur, pour le court-circuiter pendant la phase de veille.

Dans la figure 6, le transformateur comporte un troisième enroulement 17. Le transistor MOS 18 de commande de la durée du cycle et sa diode 19 sont ici connectés sur cet enroulement pour le court-circuiter pendant la phase de veille.

## Revendications

**1.** Procédé de commande d'un convertisseur de tension continu-continu à stockage inductif fonctionnant selon des cycles de transfert d'énergie entre une source primaire et une source secondaire, chaque cycle comprenant : deux phases distinctes, une phase d'accumulation d'énergie magnétique dans un élément de stockage inductif à transformateur (3) à partir de la source primaire (5) et une phase de restitution de cette énergie dans la source secondaire (8), et comportant pour ce faire, outre ledit élément de stockage inductif (3), un circuit primaire à interrupteur commandé (6) intercalé entre la source primaire (5) et l'élément de stockage inductif (3), et un circuit secondaire à interrupteur commandé (9) intercalé entre l'élément de stockage inductif (3) et la source secondaire (8), ledit procédé de commande étant **caractérisé par le fait que** l'on introduit dans le cycle de fonctionnement une phase énergétiquement neutre pendant laquelle l'élément de stockage inductif (3) conserve son énergie, les interrupteurs commandés (6,9) des circuits primaire et secondaire étant ouverts et des moyens assurant le maintien d'une tension nulle aux bornes de l'élément de stockage inductif (3), cette phase énergétiquement neutre ayant une durée au sein d'un cycle de transfert d'énergie telle que le convertisseur fonctionne à fréquence prédéterminée.

**2.** Procédé selon la revendication 1, dans lequel ladite fréquence prédéterminée est la fréquence de fonctionnement à tension minimum et charge maximum.

**3.** Procédé selon l'une quelconque des revendications 1 et 2, dans lequel on débute ladite phase énergétiquement neutre à un passage à 0 de la tension aux bornes de l'inductance magnétisante de l'élément de stockage inductif.

**4.** Procédé selon l'une quelconque des revendications 1 à 3, dans lequel on débute ladite phase énergétiquement neutre alors que le courant traversant l'inductance magnétisante est le plus faible possible.

5. Procédé selon l'une quelconque des revendications 1 à 4, dans lequel, en vue d'introduire ladite phase énergétiquement neutre, on court-circuite ledit élément inductif.

6. Procédé selon la revendication 5, dans lequel on court-circuite ledit élément inductif à l'aide d'un transistor MOS disposé en série avec une diode, la fermeture du transistor étant commandée à un instant où la diode est polarisée en inverse.

7. Convertisseur de tension continu-continu à stockage inductif, comprenant un élément de stockage inductif à transformateur (3), un circuit primaire à interrupteur commandé (6) intercalé entre une source primaire (5) de fourniture d'énergie et ledit élément de stockage inductif (3), un circuit secondaire à interrupteur commandé (9) intercalé entre ledit élément de stockage inductif (3) et une source secondaire (8) de restitution d'énergie et des moyens pour commander cycliquement, à la fermeture, les interrupteurs commandés desdits circuits primaire et secondaire pendant des intervalles de temps distincts afin de doter le convertisseur d'un fonctionnement cyclique, avec, au cours de chaque cycle, une phase d'accumulation d'énergie et une phase de restitution d'énergie, **caractérisé par le fait qu'**il comprend des moyens de court-circuit (12,13; 15,16; 18,19) pour court-circuiter ledit élément de stockage inductif (3), et des moyens pour commander lesdits moyens de court-circuit de manière à introduire dans le cycle de fonctionnement du convertisseur une phase énergétiquement neutre pendant laquelle l'élément de stockage inductif (3) conserve son énergie, les interrupteurs commandés (6,9) des circuits primaire et secondaire étant ouverts.

8. Convertisseur selon la revendication 7, **caractérisé en ce que** ledit élément de stockage inductif (3) est un élément de couplage inductif entre les circuits primaire et secondaire comprenant un enroulement primaire (4) appartenant audit circuit primaire, lesdits moyens de court-circuit comprenant un interrupteur commandé (13) disposé en parallèle sur ledit enroulement primaire.

9. Convertisseur selon la revendication 7, **caractérisé en ce que** ledit élément de stockage inductif (3) est un élément de couplage inductif entre les circuits primaire et secondaire comprenant un enroulement secondaire (7) appartenant audit circuit secondaire, lesdits moyens de court-circuit comprenant un interrupteur commandé (15) disposé en parallèle sur ledit enroulement secondaire.

10. Convertisseur selon la revendication 7, **caractérisé en ce que** ledit élément de stockage inductif (3) est un élément de couplage inductif entre les circuits primaire et secondaire comprenant un enroulement auxiliaire(17) indépendant des circuits primaire et secondaire, lesdits moyens de court-circuit comprenant un interrupteur commandé (18) disposé en parallèle sur ledit enroulement auxiliaire.

**Claims**

1. Process for controlling a DC/DC voltage converter with inductive storage operating according to cycles for transferring energy between a primary source and a secondary source, each cycle comprising: two distinct phases, a phase of accumulation of magnetic energy in an inductive storage element with transformer (3) from the primary source (5) and a phase of restitution of this energy in the secondary source (8), and comprising in order to do this, apart from the said inductive storage element (3), a primary circuit with a controlled switch (6) interposed between the primary source (5) and the inductive storage element (3), and a secondary circuit with a controlled switch (9) interposed between the inductive storage element (3) and the secondary source (8), the said control process being **characterized in that** an energetically neutral phase during which the inductive storage element (3) retains its energy, the controlled switches (6,9) of the primary and secondary circuits being open and means ensuring the maintenance of a zero voltage across the terminals of the inductive storage element (3), is introduced into the operating cycle, this energetically neutral phase having a duration within an energy transfer cycle such that the converter operates at a predetermined frequency.

2. Process according to Claim 1, in which the said predetermined frequency is the operating frequency at minimum voltage and maximum load.

3. Process according to either of Claims 1 and 2, in which the said energetically neutral phase is started at a 0 crossing of the voltage across the terminals of the magnetizing inductance of the inductive storage element.

4. Process according to any one of Claims 1 to 3, in which the said energetically neutral phase is started while the current passing through the magnetizing inductance is as small as possible.

5. Process according to any one of Claims 1 to 4, in which, with a view to introducing the said energetically neutral phase, the said inductive element is short-circuited.

**6.** Process according to Claim 5, in which the said inductive element is short-circuited with the aid of an MOS transistor arranged in series with a diode, the closing of the transistor being commanded at an instant at which the diode is reverse-biased.

**7.** DC/DC voltage converter with inductive storage, comprising an inductive storage element with transformer (3), a primary circuit with a controlled switch (6) interposed between a primary source (5) for providing energy and the said inductive storage element (3), and a secondary circuit with a controlled switch (9) interposed between the said inductive storage element (3) and a secondary source (8) for energy. restitution and means for cyclically closing the controlled switches of the said primary and secondary circuits during distinct time intervals so as to endow the converter with cyclic operation, with, in the course of each cycle, a phase of energy accumulation and a phase of energy restitution, **characterized in that** it comprises short-circuiting means (12,13; 15,16; 18,19) for short-circuiting the said inductive storage element (3), and means for controlling the said short-circuiting means in such a way as to introduce an energetically neutral phase into the operating cycle of the converter, during which phase the inductive storage element (3) retains its energy, the controlled switches (6,9) of the primary and secondary circuits being open.

**8.** Converter according to Claim 7, **characterized in that** the said inductive storage element (3) is an element for inductive coupling between the primary and secondary circuits comprising a primary winding (4) belonging to the said primary circuit, the said short-circuiting means comprising a controlled switch (13) arranged in parallel with the said primary winding.

**9.** Converter according to Claim 7, **characterized in that** the said inductive storage element (3) is an element for inductive coupling between the primary and secondary circuits comprising a secondary winding (7) belonging to the said secondary circuit, the said short-circuiting means comprising a controlled switch (15) arranged in parallel with the said secondary winding.

**10.** Converter according to Claim 7, **characterized in that** the said inductive storage element (3) is an element for inductive coupling between the primary and secondary circuits comprising an auxiliary winding (17) independent of the primary and secondary circuits, the said short-circuiting means comprising a controlled switch (18) arranged in parallel with the said auxiliary winding.

**Patentansprüche**

**1.** Verfahren zur Steuerung eines Gleichspannungswandlers mit induktiver Energiespeicherung, der gemäß Energietransfer-Zyklen zwischen einer primären und einer sekundären Quelle arbeitet, wobei jeder Zyklus zwei getrennte Phasen enthält, nämlich eine Phase der Akkumulierung magnetischer Energie in einem induktiven Speicherelement in Form eines Transformators (3) ausgehend von der Primärquelle (5) und eine Phase der Abgabe der Energie an die sekundäre Quelle (8), und wobei hierzu außer dem induktiven Speicherelement (3) ein primärer Schaltkreis mit einem gesteuerten Unterbrecher (6) zwischen der primären Quelle (5) und dem induktiven Speicherelement (3) und ein sekundärer Schaltkreis mit einem gesteuerten Unterbrecher (9) zwischen dem induktiven Speicherelement und der sekundären Quelle (8) vorhanden sind, **dadurch gekennzeichnet, daß** man in den Betriebszyklus eine energetisch neutrale Phase einführt, während der das induktive Speicherelement (3) seine Energie konstant hält und die gesteuerten Unterbrecher (6, 9) des primären und des sekundären Schaltkreises blockiert sind und Mittel eine Spannung null an den Klemmen des induktiven Speicherelements (3) gewährleisten, wobei diese energetisch neutrale Phase eine solche Dauer innerhalb eines Energietransferzyklus besitzt, daß der Wandler bei einer vorbestimmten Frequenz arbeitet.

**2.** Verfahren nach Anspruch 1, bei dem die vorbestimmte Frequenz die Betriebsfrequenz ist, bei der die Spannung minimal und die Last maximal ist.

**3.** Verfahren nach einem beliebigen der Ansprüche 1 und 2, bei dem die energetisch neutrale Phase bei einem Nulldurchgang der Spannung an den Klemmen der Magnetisierungsspule des induktiven Speicherelements beginnt.

**4.** Verfahren nach einem beliebigen der Ansprüche 1 bis 3, bei dem die energetisch neutrale Phase beginnt, wenn der die Magnetisierungsspule durchquerende Strom den kleinstmöglichen Wert besitzt.

**5.** Verfahren nach einem beliebigen der Ansprüche 1 bis 4, bei dem für die Einleitung der energetisch neutralen Phase das induktive Speicherelement kurzgeschlossen wird.

**6.** Verfahren nach Anspruch 5, in dem das induktive Speicherelement mithilfe eines MOS-Transistors kurzgeschlossen wird, der in Reihe mit einer Diode liegt, wobei der Transistor in einem Zeitpunkt leitend gesteuert wird, in dem die Diode in Sperr-Richtung vorgespannt ist.

7. Gleichspannungswandler mit induktiver Energiespeicherung, der ein induktives Speicherelement in Form eines Transformators (3), einen primären Schaltkreis mit einem gesteuerten Unterbrecher (6) zwischen einer primären Quelle (5), die die Energie liefert, und dem induktiven Speicherelement (3), undeinen sekundären Schaltkreis mit einem gesteuerten Unterbrecher (9) zwischen dem induktiven Speicherelement (3) und einer sekundären Quelle (8) zur Abgabe der Energie sowie Mittel aufweist, um die gesteuerten Unterbrecher des primären und des sekundären Schaltkreises zyklisch während bestimmter Zeitintervalle leitend zu steuern, sodaß im Wandler ein zyklischer Betrieb mit einer Energie-Akkumulierungsphase und einer Energie-Abgabephase realisiert wird, **dadurch gekennzeichnet, daß** er Kurzschlußmittel (12, 13; 15, 16; 18, 19) zum Kurzschließen des induktiven Speicherelements (3) sowie Mittel zur Steuerung der Kurzschlußmittel aufweist, um im Rahmen des Betriebszyklus des Wandlers eine energetisch neutrale Phase einzuführen, während der das induktive Speicherelement (3) seine Energie beibehält und die gesteuerten Unterbrecher (6, 9) des primären und des sekundären Schaltkreises offen sind.

8. Wandler nach Anspruch 7, **dadurch gekennzeichnet, daß** das induktive Speicherelement (3) ein induktives Koppelelement zwischen dem primären und dem sekundären Schaltkreis mit einer Primärwicklung (4) ist, die zum primären Schaltkreis gehört, und daß die Kurzschlußmittel einen gesteuerten Unterbrecher (13) aufweisen, der parallel zur Primärwicklung liegt.

9. Wandler nach Anspruch 7, **dadurch gekennzeichnet, daß** das induktive Speicherelement (3) ein induktives Koppelelement zwischen dem primären und dem sekundären Schaltkreis mit einer Sekundärwicklung (7) ist, die zum sekundären Schaltkreis gehört, und daß die Kurzschlußmittel einen gesteuerten Unterbrecher (15) aufweisen, der parallel zur Sekundärwicklung liegt.

10. Wandler nach Anspruch 7, **dadurch gekennzeichnet, daß** das induktive Speicherelement (3) ein induktives Koppelelement zwischen dem primären und dem sekundären Schaltkreis ist, das eine Hilfswicklung unabhängig vom primären und vom sekundären Schaltkreis enthält, und daß die Kurzschlußmittel einen gesteuerten Unterbrecher (18) enthalten, der parallel zu der Hilfswicklung liegt.

FIG.1

FIG.1a

FIG.2.1

FIG.2.2

FIG.2_3

FIG.2_4

FIG.2_5

FIG.2_6

EP 1 040 559 B1

FIG.4

FIG.3

FIG.5

FIG.6